# EUROPÄISCHE PATENTSCHRIFT

(11) **EP 3 516 122 B1**
(45) Veröffentlichungstag und Bekanntmachung des Hinweises auf die Patenterteilung: **04.09.2024**
(21) Anmeldenummer: 16779015.3
(22) Anmeldetag: 22.09.2016
(51) Int. Cl.: E02F 9/08, F15B 1/26, B60T 17/06, B01D 35/027, B01D 35/147, B29C 65/02, B29C 45/00, B29C 69/00, B60T 11/26

(54) **HYDRAULIKTANK UND VERFAHREN ZUR HERSTELLUNG EINES HYDRAULIKTANKS**
HYDRAULIC TANK AND METHOD FOR PRODUCING A HYDRAULIC TANK
RÉSERVOIR HYDRAULIQUE ET PROCÉDÉ DE FABRICATION D'UN RÉSERVOIR HYDRAULIQUE

(43) Veröffentlichungstag der Anmeldung: 31.07.2019
(73) Patentinhaber: ARGO-HYTOS Group AG, 6340 Baar (CH)
(72) Erfinder: WEISER, Thomas, 74889 Sinsheim (DE); TRUNNER, Daniel, 76703 Kraichtal (DE); SCHLEUTER, Tanja, 67105 Schifferstadt (DE); STECH, Jörg, 74906 Bad Rappenau (DE)
(74) Vertreter: Meissner Bolte Partnerschaft mbB
(86) Internationale Anmeldenummer: PCT/EP2016/072611
(87) Internationale Veröffentlichungsnummer: WO 2018/054474

(56) Entgegenhaltungen:
- EP-A1- 2 377 591
- WO-A1-2004/113698
- DE-A1- 102010 004 650
- DE-A1- 102013 222 908
- US-A- 3 610 457
- US-A- 5 546 286
- US-A1- 2002 003 104

## Beschreibung

Die Erfindung betrifft einen Hydrauliktank zur Bevorratung einer Hydraulikflüssigkeit mit einem einteiligen Tankgehäuse, das einen Kunststoffhohlkörper ausbildet und in einem Rotationsformverfahren hergestellt ist und das mindestens eine Anschlussöffnung aufweist, an der ein mit einer Hydraulikleitung lösbar verbindbares Anschlusselement angeordnet ist. Eine solche Vorrichtung ist aus DE10201322908 und US2002003104 bekannt.

Außerdem betrifft die Erfindung ein Verfahren zur Herstellung eines Hydrauliktanks, der ein Tankgehäuse aufweist mit mindestens einer Tanköffnung, an der ein Anschlusselement angeordnet ist, das mit einer Hydraulikleitung lösbar verbind bar ist.

Hydrauliktanks kommen in hydraulischen Systemen zum Einsatz zur Bevorratung einer Hydraulikflüssigkeit. Die Hydrauliktanks weisen ein Tankgehäuse auf mit mindestens einer Anschlussöffnung, über die dem Hydrauliktank Hydraulikflüssigkeit zugeführt und/oder Hydraulikflüssigkeit dem Hydrauliktank entnommen werden kann. Zu diesem Zweck ist an der mindestens einen Anschlussöffnung ein Anschlusselement angeordnet, das mit einer Hydraulikleitung lösbar verbindbar ist.

In vielen Fällen werden die Hydrauliktanks aus Metall gefertigt, wobei ein Blechmaterial verschweißt wird. Derartige Metalltanks zeichnen sich durch eine hohe Druck- und Temperaturbeständigkeit aus. Wird allerdings eine komplexe Geometrie für den Metalltank gefordert, so ist die Herstellung des Metalltanks mit hohen Kosten verbunden. Metalltanks haben darüber hinaus den Nachteil, dass sie schwierig zu reinigen sind und ein erhebliches Gewicht aufweisen.

In der DE 10 2011 004 596 A1 wird vorgeschlagen, einen Hydrauliktank in Form eines Kunststoffhohlkörpers auszubilden, wobei ein Tankoberteil und ein Tankunterteil jeweils in einem Spritzgießverfahren hergestellt werden und die beiden Teile anschließend zu einem Hydrauliktank zusammengefügt werden. Im Spritzgießverfahren hergestellte Hydrauliktanks lassen sich mit verhältnismäßig geringen Stückkosten herstellen, allerdings ist die Bereitstellung der Spritzgießformen mit hohen Investitionskosten verbunden.

In der DE 10 2010 049 974 A1 wird für die Herstellung eines Tankgehäuses eines Hydrauliktanks ein Rotationsformverfahren vorgeschlagen. Das Tankgehäuse weist eine Anschlussöffnung auf, die von einem Anschlusselement durchgriffen wird. An das Anschlusselement kann eine Hydraulikleitung angeschlossen werden. Das Anschlusselement bildet einen Rohrstutzen aus, der mit dem Tankgehäuse verschraubt werden kann. Zu diesem Zweck ist an der Anschlussöffnung ein metallisches Einlegeteil in Form eines Gewindeeinsatzes festgelegt. Die Verwendung von Einlegeteilen oder auch Versteifungsteilen bei der Herstellung des Tankgehäuses im Rotationsformverfahren ist mit nicht unbeträchtlichen Kosten verbunden.

Ein weiterer rotationsgeformter Hydrauliktank ist aus DE 10 2013 222 908 A1 bekannt. Der Hydrauliktank umfasst einen Tankeinlass und einen Tankauslass, wobei der Tankauslass an einem Auslassstutzen, der an dem Gehäuse angebaut wird, angeordnet ist.

Ferner ist ein Hydrauliktank, der durch Rotationsformen hergestellt wird, aus US 2002/0003104 A1 bekannt.

Aufgabe der vorliegenden Erfindung ist es, einen Hydrauliktank der eingangs genannten Art sowie ein Verfahren zur Herstellung eines Hydrauliktanks bereitzustellen, wobei der Hydrauliktank ein verbessertes Preis-Leistungs-Verhältnis unter Berücksichtigung der Investitionskosten und der geometrischen Gestaltung des Hydrauliktanks aufweist.

Diese Aufgabe wird bei einem Hydrauliktank der gattungsgemäßen Art erfindungsgemäß dadurch gelöst, dass das Anschlusselement einen Kunststoffkörper aufweist, der in einem Spritzgießverfahren hergestellt und mit dem Tankgehäuse verschweißt ist.

Der erfindungsgemäße Hydrauliktank weist ein einteiliges Tankgehäuse in Form eines Kunststoffhohlkörpers auf, der in einem Rotationsformverfahren hergestellt ist. Das Tankgehäuse weist mindestens eine Anschlussöffnung auf zum Zuführen und/oder Entnehmen von Hydraulikflüssigkeit. Zu diesem Zweck ist an der mindestens einen Anschlussöffnung ein mit einer Hydraulikleitung lösbar verbindbares Anschlusselement angeordnet, das einen Kunststoffkörper aufweist. Der Kunststoffkörper ist in einem Spritzgießverfahren hergestellt und mit dem Tankgehäuse verschweißt.

Das Tankgehäuse kann durch den Einsatz des Rotationsformverfahrens mit verhältnismäßig geringen Investitionskosten und großen gestalterischen Freiheiten und mit günstigen Stückkosten, insbesondere im Vergleich mit Metalltanks, hergestellt werden.

Das Tankgehäuse kann im Rotationsformverfahren ohne metallische Teilkomponente hergestellt sein. Kostenintensive metallische Einlege- oder Verstärkungsteile oder sonstige metallische Bauteile im Tankgehäuse können somit entfallen.

An der mindestens einen Anschlussöffnung des Tankgehäuses ist ein Anschlusselement angeordnet, das einen im Spritzgießverfahren hergestellten Kunststoffkörper aufweist. Der Kunststoffkörper ist mit dem Tankgehäuse verschweißt. Das Anschlusselement kann eine hohe Maßgenauigkeit aufweisen und zeichnet sich durch eine hohe mechanische Belastbarkeit aus. An das Anschlusselement kann eine Hydraulikleitung angeschlossen werden, über die dem Tankgehäuse Hydraulikflüssigkeit zugeführt und/oder Hydraulikflüssigkeit dem Tankgehäuse entnommen werden kann.

Insgesamt zeichnet sich der erfindungsgemäße Hydrauliktank, insbesondere bei kleinen bis mittleren Stückzahlen, durch ein sehr gutes Preis-Leistungs-Verhältnis unter Berücksichtigung der Investitionskosten und der gestalterischen Möglichkeiten zur Erzielung auch komplexer Geometrien aus.

Je nach Einsatzzweck des Hydrauliktanks kann das Tankgehäuse kostengünstig mit der jeweils gewünschten Geometrie hergestellt werden. Das Tank-gehäuse kann hierbei je nach Bedarf eine gewünschte Anzahl von Anschlussöffnungen aufweisen, und an die Anschlussöffnungen kann jeweils ein vorgefertigtes Anschlusselement angeordnet werden, dessen Kunststoffkörper mit dem Tankgehäuse verschweißt wird. Die Anschlusselemente können in großer Stückzahl in Form modularer Bauteile hergestellt und bevorratet werden und können für unterschiedliche Tankgehäuse, die jeweils in einem Rotationsformverfahren hergestellt sind, eingesetzt werden.

Der Kunststoffkörper des mindestens einen Anschlusselements ist bevorzugt als einteiliges Bauteil im Spritzgießverfahren hergestellt. Der Kunststoffkörper muss bei einer derartigen Ausgestaltung nicht aus mehreren Bestandteilen zusammengefügt werden. Dies erlaubt eine weitere Kostenreduzierung.

Von Vorteil ist es, wenn das komplette Anschlusselement als im Spritzgießverfahren hergestellter Kunststoffkörper ohne metallische Teilkomponente ausgestaltet ist. Bei einer derartigen Ausgestaltung weist das Anschlusselement insbesondere kein metallisches Einlege- oder Versteifungsteil auf und kann daher in seiner Gesamtheit kostengünstig im Spritzgießverfahren hergestellt werden.

Die Verschweißung des Kunststoffkörpers des mindestens einen Anschlusselements mit dem Tankgehäuse erfolgt vorteilhafterweise mit Hilfe eines Laserstrahls.

Es kann vorgesehen sein, dass mindestens eine erste Anschlussöffnung des Tankgehäuses eine Tankeinlassöffnung ausbildet und dass mindestens eine zweite Anschlussöffnung des Tankgehäuses eine Tankauslassöffnung ausbildet. An der mindestens einen Tankeinlassöffnung und an der mindestens einen Tankauslassöffnung ist jeweils ein Anschlusselement angeordnet, das mit einer Hydraulikleitung lösbar verbindbar ist und dessen Kunststoffkörper mit dem Tankgehäuse verschweißt ist. Über die mindestens eine Tankeinlassöffnung und das an der Tankeinlassöffnung angeordnete und mit dem Tankgehäuse verschweißte Anschlusselement kann dem Tankgehäuse Hydraulikflüssigkeit zugeführt werden, und über die mindestens eine Tankauslassöffnung und das an der Tankauslassöffnung angeordnete und mit dem Tankgehäuse verschweißte Anschlusselement kann dem Tankgehäuse Hydraulikflüssigkeit entnommen werden. Die Anschlusselemente können identisch ausgestaltet sein.

Insbesondere können die Anschlusselemente als einteilige Kunststoffkörper vorzugsweise ohne metallische Teilkomponenten im Spritzgießverfahren hergestellt sein.

Das Tankgehäuse ist bei einer vorteilhaften Ausführungsform der Erfindung aus einem Polyamidmaterial im Rotationsformverfahren hergestellt.

Bei einer bevorzugten Ausführungsform ist das Tankgehäuse im Rotationsformverfahren aus einem faserverstärkten Polyamidmaterial hergestellt, insbesondere aus einem glasfaserverstärkten Polyamidmaterial.

Der Kunststoffkörper des Anschlusselements ist bevorzugt aus einem faserverstärkten Kunststoffmaterial im Spritzgießverfahren hergestellt. Insbesondere kann vorgesehen sein, dass der Kunststoffkörper aus einem faserverstärkten Polyamidmaterial hergestellt ist, beispielsweise aus einem glasfaserverstärkten Polyamidmaterial.

Von Vorteil ist es, wenn das Anschlusselement einen Rohrstutzen ausbildet, der außenseitig eine Aufnahmestruktur für ein mit einer Hydraulikleitung lösbar verbindbares Schnellkupplungsteil aufweist. Derartige Schnellkupplungsteile sind dem Fachmann aus der EP 1 653 141 Al bekannt. Mit ihrer Hilfe kann eine Hydraulikleitung auf sehr einfache Weise ohne Einsatz eines Spezialwerkzeuges flüssigkeitsdicht mit dem Anschlusselement verbunden werden. Die Aufnahmestruktur kann beispielsweise mehrere bezogen auf die Längsachse des Rohrstutzens im Abstand zueinander angeordnete Ringnuten ausbilden, die den Rohrstutzen in Umfangsrichtung umgeben. Ein mit dem Rohrstutzen lösbar verbindbares Schnellkupplungsteil kann bezogen auf die Längsachse des Rohrstutzens in axialer Richtung auf den Rohrstutzen aufgesetzt werden, wobei das Schnellkupplungsteil ein Außenrohrstück und ein koaxial zu diesem ausgerichtetes Innenrohrstück aufweist. Das Außenrohrstück kann auf den Rohrstutzen des Anschlusselements aufgesteckt werden, wobei das Innenrohrstück in den Rohrstutzen eintaucht unter Zwischenlage eines Dichtrings, der an einer Stirnseite des Rohrstutzens zur Anlage gelangt. Zur axialen Festlegung des Schnellkupplungsteils am Rohrstutzen kann eine elastisch aufspreizbare und quer zur Längsachse des Rohrstutzens auf das Außenrohrstück aufsetzbare Sicherungsmanschette zum Einsatz kommen, die auf ihrer Innenseite ein Arretierungselement aufweist. Beim Aufsetzen der Sicherungsmanschette auf das Außenrohrstück durchgreift das Arretierungselement eine Durchbrechung des Außenrohrstücks und taucht in eine der Ringnuten des Rohrstücks ein. Dem Außen- und Innenrohrstück abgewandt weist das Schnellkupplungsteil einen Anschlussnippel auf, an den eine Hydraulikleitung, beispielsweise ein Hydraulikschlauch, angeschlossen werden kann.

Der Einsatz eines Anschlusselements, das einen Rohrstutzen mit einer außenseitig angeordneten Aufnahmestruktur ausbildet, ermöglicht es, das Anschlusselement mit einer Hydraulikleitung lösbar zu verbinden, ohne dass spezielles Werkzeug zum Einsatz kommen muss und ohne dass auf das Anschlusselement eine hohe mechanische Belastung, insbesondere ein hohes Drehmoment, ausgeübt wird.

Von besonderem Vorteil ist es, wenn in das Tankgehäuse ein Filtersystem integriert ist. Das Filtersystem kann beispielsweise als Saugfilter, als Rücklauffilter oder auch als Rücklaufsaugfilter ausgestaltet sein.

Bei einer besonders bevorzugten Ausgestaltung der Erfindung weist das Tankgehäuse eine Filterzugangsöffnung auf, die von einem Randabschnitt des Tankgehäuses umgeben ist, wobei am Randabschnitt ein über die Filterzugangsöffnung in das Tankgehäuse eingesetztes beispielsweise topfförmiges Filtergehäuse festgelegt ist, das als Kunststoffkörper in einem Spritzgießverfahren hergestellt ist. Eine derartige Ausgestaltung ermöglicht auf vorteilhafte Weise die Integration eines Filtersystems in das Tankgehäuse, indem ein Filtergehäuse über eine Filterzugangsöffnung in das Tankgehäuse eingesetzt und an diesem festgelegt wird. In das Filtergehäuse kann ein Filterelement zum Filtrieren der Hydraulikflüssigkeit eingesetzt werden. Das Filtergehäuse ist als Kunststoffkörper in einem Spritzgießverfahren hergestellt.

Bevorzugt ist das Filtergehäuse als einteiliger Kunststoffkörper im Spritzgießverfahren hergestellt.

Zur Herstellung des Filtergehäuses kann ein faserverstärktes, insbesondere ein glasfaserverstärktes Kunststoffmaterial zum Einsatz kommen. Das Filtergehäuse kann über die Filterzugangsöffnung in das Tankgehäuse eingesetzt und anschließend an einem die Filterzugangsöffnung umgebenden Randabschnitt des Tankgehäuses festgelegt werden.

Der die Filterzugangsöffnung umgebende Randabschnitt ist bevorzugt als im Tankgehäuse angeordneter Stützring ausgestaltet. Der Stützring kann an einer in das Tankgehäuse eintauchenden Innenwand angeordnet sein.

Das Filtergehäuse ist bei einer vorteilhaften Ausführungsform der Erfindung mit dem die Filterzugangsöffnung umgebenden Randabschnitt verschweißt. Das Filtergehäuse hat hierbei nicht nur die Funktion, ein Filterelement aufzunehmen, sondern aufgrund der Verschweißung erhöht das Filtergehäuse auch die mechanische Stabilität des Tankgehäuses im Bereich der Filterzugangsöffnung.

Nach dem Einsetzen eines Filterelements in das Filtergehäuse kann die Filterzugangsöffnung mittels eines Deckels verschlossen werden. Günstigerweise ist der Deckel mit dem Tankgehäuse verschraubbar.

Das Filtergehäuse ist bei einer vorteilhaften Ausführungsform der Erfindung aus einem faserverstärkten Polyamidmaterial geformt, insbesondere aus einem glasfaserverstärkten Polyamidmaterial.

Von Vorteil ist es, wenn das Tankgehäuse ein Filterkopfteil ausbildet, an dem mindestens eine Anschlussöffnung angeordnet ist und das den die Filterzugangsöffnung umgebenden Randabschnitt aufweist.

Bei einer vorteilhaften Ausführungsform der Erfindung sind am Filterkopfteil mindestens eine erste Anschlussöffnung in Form einer Tankeinlassöffnung und mindestens eine zweite Anschlussöffnung in Form einer Tankauslassöffnung angeordnet. An der mindestens einen Tankeinlassöffnung und an der mindestens einen Tankauslassöffnung ist jeweils ein Anschlusselement angeordnet, das wie voranstehend bereits erläutert einen im Spritzgießverfahren hergestellten Kunststoffkörper aufweist und mit dem Filterkopfteil verschweißt ist. Insbesondere kann vorgesehen sein, dass die Anschlusselemente jeweils als einteilige, in einem Spritzgießverfahren hergestellte Kunststoffkörper ausgestaltet sind.

Das in das Filtergehäuse einsetzbare Filterelement weist bei einer vorteilhaften Ausführungsform der Erfindung eine obere und eine untere Endscheibe auf, die zwischen sich ein hohlzylinderförmiges Filtermedium aufnehmen, wobei die obere Endscheibe einen Innenraum des Filterkopfteils in einen Einlassraum für zu filtrierende Hydraulikflüssigkeit und einen Auslassraum für gefilterte Hydraulikflüssigkeit unterteilt, wobei die am Filterkopfteil angeordnete mindestens eine Tankeinlassöffnung in den Einlassraum mündet und wobei die am Filterkopfteil angeordnete mindestens eine Tankauslassöffnung in den Auslassraum mündet. Bei einer derartigen Ausgestaltung unterteilt die obere Endscheibe des in das Filtergehäuse einsetzbaren Filterelements den Innenraum des Filterkopfteils in einen Einlassraum und in einen Auslassraum. Der Einlassraum steht mit mindestens einer am Filterkopfteil angeordneten Tankeinlassöffnung in Strömungsverbindung und der Auslassraum steht mit mindestens einer am Filterkopfteil angeordneten Tankauslassöffnung in Strömungsverbindung. Hydraulikflüssigkeit kann vom Einlassraum durch das Filtermedium des Filterelements hindurch zum Auslassraum gelangen, wobei es beim Durchströmen des Filtermediums gefiltert wird. Das Filterkopfteil kann eine verhältnismäßig einfache Geometrie aufweisen, es kann beispielsweise zylinderförmig ausgestaltet sein. Das Filterkopfteil bildet einen Teil des Tankgehäuses aus, das in einem Rotationsformverfahren hergestellt ist. Die notwendige flüssigkeitsdichte Trennung des Einlassraums vom Auslassraum wird von der oberen Endscheibe des Filterelements übernommen.

Bei einer vorteilhaften Ausführungsform der Erfindung bildet die obere Endscheibe des Filterelements eine schräg zur Längsachse des Filterelements ausgerichtete Trennscheibe aus, die an einer Innenseite des Filterkopfteils flüssigkeitsdicht anliegt. Ein an der Innenseite des Filterkopfteils anliegender, umlaufender Rand der Trennscheibe kann beispielsweise in Form einer Dichtlippe ausgestaltet sein.

In Fällen, in denen am Filterkopfteil mindestens eine Tankeinlassöffnung und mindestens eine Tankauslassöffnung angeordnet ist, ist es im Hinblick auf eine möglichst kompakte Ausgestaltung des Hydrauliktanks von Vorteil, wenn die mindestens eine Tankeinlassöffnung und die mindestens eine Tankauslassöffnung bezogen auf eine Längsachse des Filterelements auf gleicher Höhe angeordnet sind.

Bei einer vorteilhaften Ausführungsform der Erfindung bildet das Filtergehäuse an seinem in das Tankgehäuse eintauchenden Endabschnitt einen Aufnahmeraum für ein Einlassventil und/oder ein Auslassventil aus. Über das Auslassventil kann gefilterte Hydraulikflüssigkeit aus dem Filtergehäuse heraus in den Innenraum des Tankgehäuses gelangen, und über das Einlassventil kann Hydraulikflüssigkeit dem Innenraum des Tankgehäuses entnommen werden, wobei die Hydraulikflüssigkeit anschließend über das Filtergehäuse zu der am Filterkopfteil angeordneten Tankauslassöffnung gelangt.

Im Aufnahmeraum kann auch ein Siebelement angeordnet sein. Mit Hilfe des Siebelements lassen sich grobe Verunreinigungen zurückhalten.

Es kann vorgesehen sein, dass das Filtergehäuse an seinem in das Tankgehäuse eintauchenden Endabschnitt einen Stützboden aufweist mit einer Auslassöffnung, die von einem federelastisch in Richtung auf die Auslassöffnung vorgespannten Auslassventilelement des Auslassventils verschließbar ist, wobei das Auslassventilelement eine Einlassöffnung aufweist, die von einem Einlassventilelement des Einlassventils verschließbar ist. Strömt über mindestens eine am Filterkopfteil angeordnete Tankeinlassöffnung eine größere Menge an Hydraulikflüssigkeit in das Filtergehäuse ein, als über mindestens eine am Filterkopfteil angeordnete Tankauslassöffnung aus dem Filtergehäuse herausströmt, so kann sich im Filtergehäuse ein Überdruck ausbilden. Überschreitet der im Filtergehäuse herrschende Druck der Hydraulikflüssigkeit einen vorgegebenen Maximalwert, der beispielsweise 0,2 bar oder 0,3 bar betragen kann, so öffnet das Auslassventil, indem das Auslassventilelement entgegen der auf ihn einwirkenden federelastischen Rückstellkraft von der Auslassöffnung des Filtergehäuses abhebt, so dass Hydraulikflüssigkeit über die Auslassöffnung aus dem Filtergehäuse in den Innenraum des Tankgehäuses strömen kann. Wird über die mindestens eine am Filterkopfteil angeordnete Tankauslassöffnung eine größere Menge an Hydraulikflüssigkeit aus dem Filtergehäuse abgesaugt, als über die mindestens eine am Filterkopfteil angeordnete Tankeinlassöffnung in das Filtergehäuse hineinströmt, so kann sich im Filtergehäuse ein Unterdruck ausbilden, unter dessen Wirkung das Einlassventilelement von der Einlassöffnung abhebt und somit die Einlassöffnung freigibt, so dass über die Einlassöffnung Hydraulikflüssigkeit aus dem Innenraum des Tankgehäuses in das Filtergehäuse strömen kann.

Von Vorteil ist es, wenn sich das Filterelement an einem in das Tankgehäuse eintauchenden Endabschnitt des Filtergehäuses abstützt. Die beim Durchströmen von Hydraulikflüssigkeit auf das Filterelement in axialer Richtung einwirkende mechanische Belastung wird bei einer derartigen Ausgestaltung vom Filtergehäuse aufgenommen, das bevorzugt mit dem Tankgehäuse verschweißt ist.

Um die mechanische Stabilität des Tankgehäuses zu erhöhen, bildet das Tankgehäuse bei einer vorteilhaften Ausgestaltung der Erfindung mindestens eine Traverse aus, die sich von einer ersten Tankgehäusewand zu einer gegenüberliegenden zweiten Tankgehäusewand erstreckt und hohl ausgestaltet ist. Die mindestens eine Traverse durchgreift den Innenraum des Tankgehäuses und bildet eine einstückige mechanische Verbindung zwischen zwei einander gegenüberliegenden Tankgehäusewänden. Dies verleiht dem Tankgehäuse eine besonders hohe mechanische Stabilität.

Das Tankgehäuse bildet günstigerweise eine Belüftungsöffnung aus, an der ein Belüftungsfilter angeordnet ist. Bevorzugt ist in das Belüftungsfilter ein bidirektionales Ventil integriert. Über das Belüftungsfilter und das integrierte Ventil kann beim Befüllen des Hydrauliktanks Luft aus dem Tankgehäuse entweichen, sobald ein vorgegebener Maximaldruck im Hydrauliktank überschritten wird, und bei der Entnahme von Hydraulikflüssigkeit kann über das Belüftungsfilter und das integrierte Ventil Luft in das Tankgehäuse einströmen. Die einströmende Luft wird mittels des Belüftungsfilters gefiltert.

Bevorzugt ist an mindestens einer Anschlussöffnung des Tankgehäuses ein in das Tankgehäuse eintauchendes Rohrstück gehalten. Bevorzugt durchgreift das Rohrstück die Anschlussöffnung.

Günstig ist es, wenn das Rohrstück fluchtend zu einem an der Anschlussöffnung angeordneten und mit dem Tankgehäuse verschweißten Anschlusselement ausgerichtet ist. Über das Rohrstück kann der Hydrauliktank mit Flüssigkeit befüllt werden. Alternativ oder ergänzend kann vorgesehen sein, dass Hydraulikflüssigkeit dem Tankgehäuse über das Rohrstück entnommen werden kann. Das Rohrstück kann somit eine Rücklaufleitung ausbilden, über die Hydraulikflüssigkeit in das Tankgehäuse einströmt, oder auch eine Saugleitung, über die Hydraulikflüssigkeit dem Tankgehäuse entnommen werden kann. In beiden Fällen lässt sich eine strömungsgünstige Ausgestaltung realisieren.

Bevorzugt ist an mehreren Anschlussöffnungen des Tankgehäuses, die über das Tankgehäuse verteilt angeordnet sind, ein Rohrstück gehalten, das in das Tankgehäuse eintaucht und die Entnahme und/oder die Zufuhr von Hydraulikflüssigkeit ermöglicht.

Bei einer vorteilhaften Ausgestaltung des erfindungsgemäßen Hydrauliktanks ist ein innerhalb des Tankgehäuses angeordneter Bereich des Rohrstücks als Schutzsieb ausgestaltet, insbesondere als zylindrisches oder kegelstumpfförmiges Schutzsieb.

Günstig ist es, wenn das Rohrstück mit dem Tankgehäuse verschweißt ist.

Es kann vorgesehen sein, dass eine Anschlussöffnung des Tankgehäuses eine Stufe ausbildet, an der ein in das Tankgehäuse eintauchendes Rohrstück mit einer radialen Erweiterung anliegt. Im Bereich der radialen Erweiterung kann das Rohrstück mit dem Tankgehäuse verschweißt sein.

Das Rohrstück ist günstigerweise in einem Spritzgießverfahren hergestellt. Bevorzugt ist das Rohrstück aus einem faserverstärkten Kunststoffmaterial hergestellt, insbesondere aus einem glasfaserverstärkten Kunststoffmaterial. Es kann beispielsweise vorgesehen sein, dass das Rohrstück aus einem faserverstärkten, insbesondere glasfaserverstärkten Polyamidmaterial hergestellt ist.

Alternativ oder ergänzend kann vorgesehen sein, dass mindestens ein Rohrstück aus Metall gefertigt ist.

Wie bereits erwähnt, betrifft die Erfindung auch ein Verfahren zum Herstellen eines Hydrauliktanks, insbesondere eines erfindungsgemäßen Hydrauliktanks, wie er voranstehend beschrieben wurde. Der Hydrauliktank weist ein Tankgehäuse auf mit mindestens einer Anschlussöffnung, an der ein Anschlusselement angeordnet ist, das mit einer Hydraulikleitung lösbar verbindbar ist. Um den Hydrauliktank kostengünstiger herstellen zu können, umfasst das erfindungsgemäße Verfahren die folgenden Schritte:
- Herstellen des Tankgehäuses als einteiliger Kunststoffhohlkörper in einem Rotationsformverfahren;
- Bereitstellen des Anschlusselements mit einem Kunststoffkörper, der in einem Spritzgießverfahren hergestellt wird;
- Verschweißen des Kunststoffkörpers im Bereich der Anschlussöffnung mit dem Tankgehäuse.

Erfindungsgemäß wird das Tankgehäuse kostengünstig in einem Rotationsformverfahren als einteiliger Kunststoffhohlkörper hergestellt, wobei das Tankgehäuse mindestens eine Anschlussöffnung aufweist, beispielsweise eine Tankeinlassöffnung und/oder eine Tankauslassöffnung. Im Bereich der Anschlussöffnung wird das Tankgehäuse mit dem Kunststoffkörper eines vorgefertigten Anschlusselements verschweißt, wobei der Kunststoffkörper in einem Spritzgießverfahren hergestellt wird.

Das Tankgehäuse kann ohne Verwendung metallischer Teilkomponenten, also insbesondere ohne metallische Einlege- oder Verstärkungsteile, im Rotationsformverfahren hergestellt werden.

Der Kunststoffkörper des Anschlusselements wird im Spritzgießverfahren bevorzugt als einteiliger Kunststoffkörper hergestellt.

Von Vorteil ist es, wenn das komplette Anschlusselement als Kunststoffkörper ohne metallische Teilkomponente in einem Spritzgießverfahren hergestellt wird. Bei einer derartigen Ausgestaltung des erfindungsgemäßen Verfahrens wird das Anschlusselement insbesondere ohne metallische Einlege- oder Verstärkungsteile in einem Spritzgießverfahren hergestellt. Dies verringert die Herstellungskosten des Anschlusselements.

Bevorzugt wird das komplette Anschlusselement im Spritzgießverfahren als einteiliger Kunststoffkörper hergestellt.

Der Kunststoffkörper des Anschlusselements wird günstigerweise mit Hilfe eines Laserstrahls mit dem Tankgehäuse verschweißt.

Bei einer vorteilhaften Ausführungsform des erfindungsgemäßen Verfahrens wird in das Tankgehäuse ein Filtersystem integriert.

Zur Integration eines Filtersystems wird das Tankgehäuse bei einer bevorzugten Ausgestaltung des erfindungsgemäßen Verfahrens im Rotationsformverfahren mit einem Filterkopfteil ausgestaltet, das mindestens eine Anschlussöffnung aufweist, beispielsweise zumindest eine Tankeinlassöffnung und/oder zumindest eine Tankauslassöffnung, und das eine Filterzugangsöffnung umgibt, und ein beispielsweise topfförmiges Filtergehäuse wird als vorzugsweise einteilig ausgestalteter Kunststoffkörper in einem Spritzgießverfahren hergestellt, über die Filterzugangsöffnung in das Tankgehäuse eingesetzt und an einem die Filterzugangsöffnung umgebenden Randabschnitt des Filterkopfteils festgelegt, und ein Filterelement wird in das Filtergehäuse eingesetzt. In das Tankgehäuse wird somit ein Filtergehäuse eingesetzt, in das wiederum ein Filterelement eingesetzt wird zum Filtern der Hydraulikflüssigkeit. Das Filtergehäuse ist als modulares Bauteil ausgestaltet, das in einem Spritzgießverfahren hergestellt wird. Das Filtergehäuse kann ebenso wie die zum Einsatz kommenden Anschlusselemente in großer Stückzahl kostengünstig hergestellt und für unterschiedlichste Tankgehäuse verwendet werden.

Bevorzugt wird das über die Filterzugangsöffnung in das Tankgehäuse eingesetzte Filtergehäuse mit dem die Filterzugangsöffnung umgeben Randabschnitt verschweißt, günstigerweise mit Hilfe eines Laserstrahls. Das Verschweißen des Filtergehäuses mit dem Randabschnitt erlaubt die Aufnahme axialer Kräfte, die beim Durchströmen von Hydraulikflüssigkeit auf das im Filtergehäuse positionierte Filterelement einwirken.

Die nachfolgende Beschreibung einer vorteilhaften Ausführungsform der Erfindung dient im Zusammenhang mit der Zeichnung der näheren Erläuterung. Es zeigen:

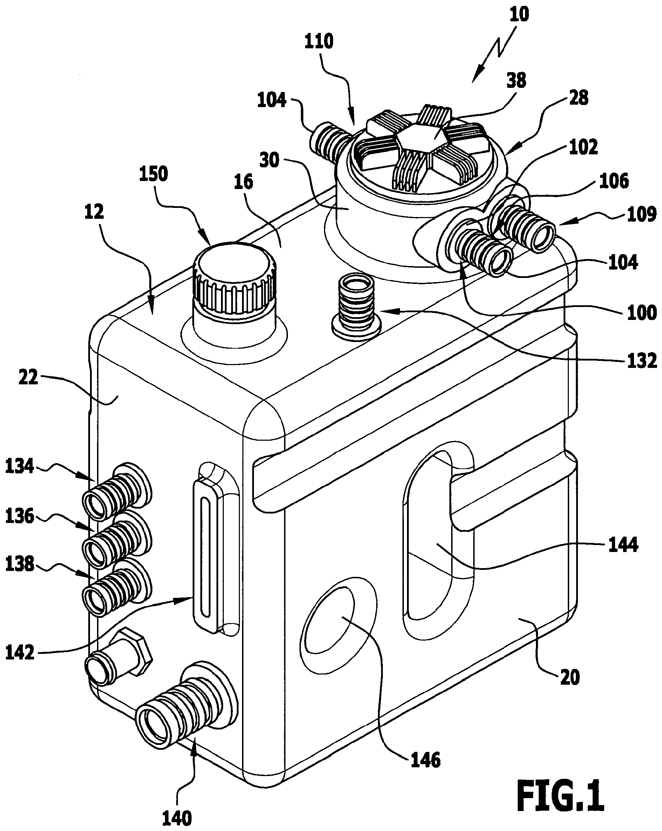

Figur 1: eine perspektivische Darstellung eines Hydrauliktanks;

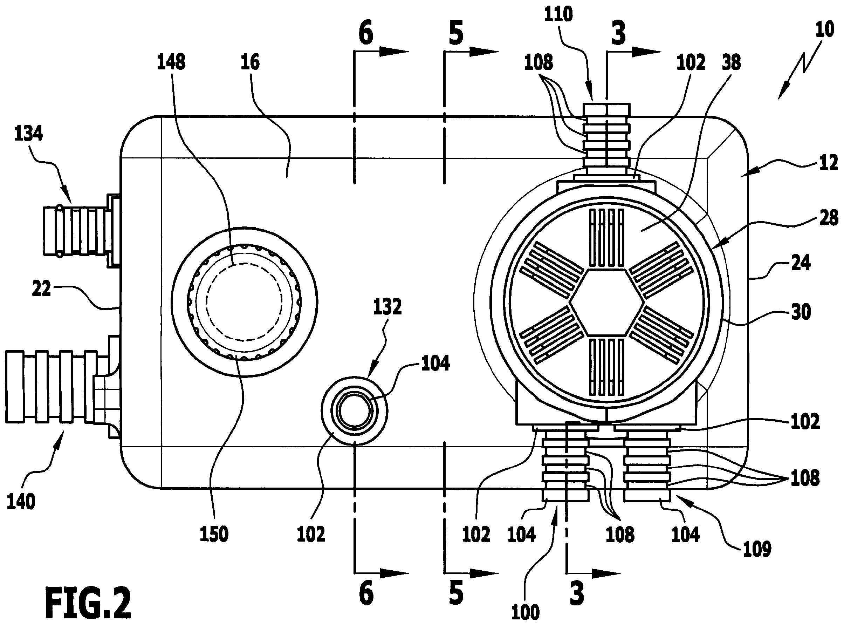

Figur 2: eine Draufsicht auf den Hydrauliktank aus Figur 1;
Figur 3: eine Schnittansicht des Hydrauliktanks längs der Linie 3 - 3 in Figur 2;

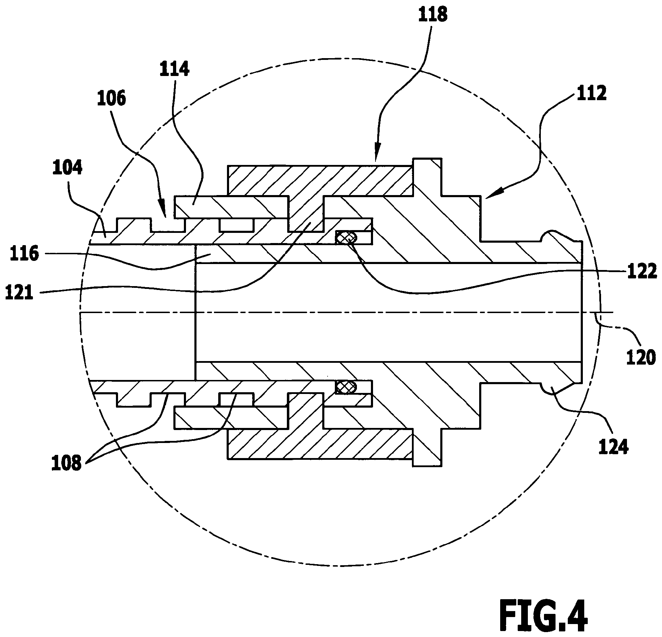

Figur 4: eine vergrößerte Darstellung von Detail A aus Figur 3;
Figur 5: eine Schnittansicht des Hydrauliktanks längs der Linie 5 - 5 in Figur 2;

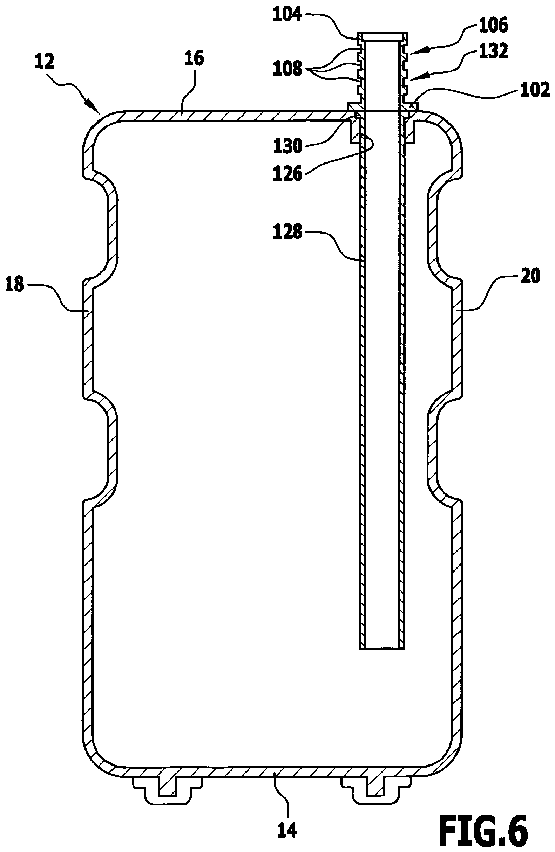

Figur 6: eine Schnittansicht des Hydrauliktanks längs der Linie 6 - 6 in Figur 2.

In der Zeichnung ist eine vorteilhafte Ausführungsform eines erfindungsgemäßen Hydrauliktanks schematisch dargestellt, der insgesamt mit dem Bezugszeichen 10 belegt ist. Der Hydrauliktank 10 weist ein Tankgehäuse 12 auf, das als einteiliger Kunststoffhohlkörper in einem Rotationsformverfahren aus einem Polyamidmaterial, vorzugsweise aus einem faserverstärkten Polyamidmaterial, hergestellt ist. Das Tankgehäuse 12 ist bei der dargestellten Ausführungsform im Wesentlichen quaderförmig ausgebildet und umfasst eine Bodenwand 14, eine Deckenwand 16, eine Rückwand 18, eine Stirnwand 20 sowie eine erste Seitenwand 22 und eine zweite Seitenwand 24, die einen Innenraum 26 des Tankgehäuses umgeben.

In das Tankgehäuse 12 ist ein nachfolgend näher erläutertes Filtersystem 27 integriert, das in der dargestellten Ausführungsform ein Rücklaufsaugfilter ausbildet. Alternativ könnte das Filtersystem 27 auch als Rücklauffilter oder als Saugfilter ausgestaltet sein. Derartige Filterausführungen sind dem Fachmann an sich bekannt.

Zur Integration des Filtersystems 27 in das Tankgehäuse 12 bildet die Deckenwand 16 in der dargestellten Ausführungsform ein doppelwandiges, im Wesentlichen zylindrisches Filterkopfteil 28 aus mit einer nach Art eines Kragens in die der Bodenwand 14 abgewandte Richtung nach oben ausgerichteten Außenwand 30 und einer in den Innenraum 26 eintauchenden Innenwand 32, die an ihrem in den Innenraum 26 eintauchenden Ende einen radial nach innen gerichteten Stützring 34 ausbildet. Das Filterkopfteil 28 umgibt eine Filterzugangsöffnung 36 und kann mit Hilfe eines Deckels 38 unter Zwischenlage eines Dichtrings 40 flüssigkeitsdicht verschlossen werden. Der Deckel 38 weist hierzu ein Außengewinde auf, das in ein komplementär ausgestaltetes Innengewinde der Innenwand 32 eingeschraubt werden kann.

Über die Filterzugangsöffnung 36 ist ein topfförmiges Filtergehäuse 46 in den Innenraum 26 des Tankgehäuses 12 eingesetzt, wobei sich das Filtergehäuse 26 mittels eines Stützflansches 47 am Stützring 34 des Filterkopfteils 28 abstützt. Der Stützring 34 bildet einen die Filterzugangsöffnung 36 in Umfangsrichtung umgebenden Randabschnitt des Tankgehäuses 12.

Das Filtergehäuse 46 ist in einem Spritzgießverfahren aus einem faserverstärkten Polyamidmaterial hergestellt und im Bereich des Stützrings 34 mit Hilfe eines Laserstrahls mit dem Tankgehäuse 12 verschweißt. Im dargestellten Ausführungsbeispiel ist das Filtergehäuse 46 im Spritzgießverfahren als einteiliger Kunststoffkörper hergestellt.

Das Filtergehäuse 46 bildet an seinem in das Tankgehäuse 12 eintauchenden Endabschnitt 48 einen Aufnahmeraum 50 aus, der ein Auslassventil 52 und ein Einlassventil 54 aufnimmt. Das Auslassventil 52 und das Einlassventil 54 werden in den Aufnahmeraum 50 eingefügt, bevor das Filtergehäuse 46 in das Tankgehäuse 12 eingesetzt und mit diesem verschweißt wird.

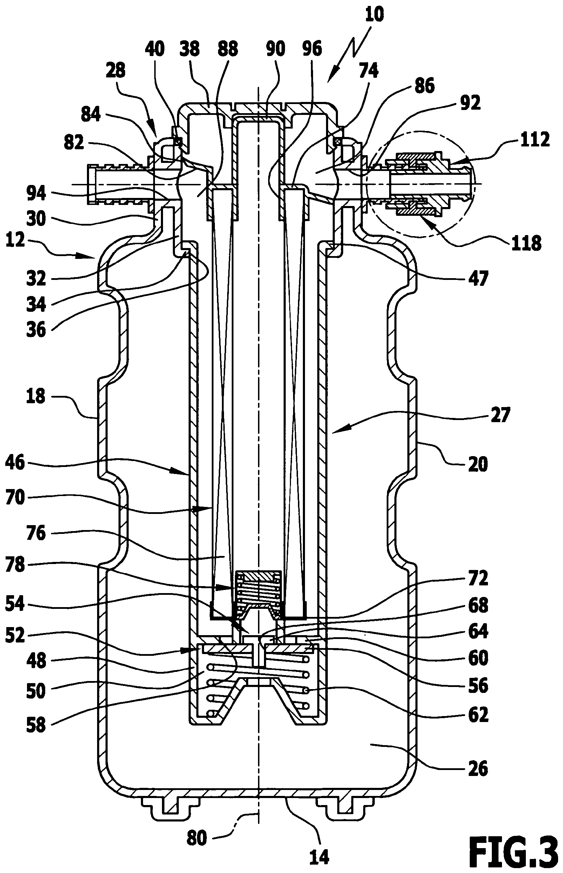

Das Auslassventil 52 weist ein Auslassventilelement 56 auf, das in der in Figur 3 dargestellten Schließstellung eine Auslassöffnung 58 flüssigkeitsdicht verschließt. Die Auslassöffnung 58 ist an einer Stützwand 60 des Filtergehäuses 46 angeordnet. Mittels einer Rückstellfeder 62 wird das Auslassventilelement 56 gegen einen Rand der Auslassöffnung 58 vorgespannt.

Das Einlassventil 54 weist ein Einlassventilelement 64 auf, das in der in Figur 3 dargestellten Schließstellung eine zentrale Einlassöffnung 68 des Auslassventilelements 56 verschließt.

Bildet sich innerhalb des Filtergehäuses 46 ein vorgegebener Überdruck von beispielsweise 0,3 bar aus, so hebt das Auslassventilelement 56 entgegen der federelastischen Rückstellkraft der Rückstellfeder 62 von der Auslassöffnung 58 ab und gibt dadurch einen Strömungsweg frei, über den im Filtergehäuse 46 befindliche Hydraulikflüssigkeit über die Auslassöffnung 58 aus dem Filtergehäuse 46 in den Innenraum 26 strömen kann. Bildet sich innerhalb des Filtergehäuses 46 ein Unterdruck aus, so hebt das Einlassventilelement 64 von der Einlassöffnung 68 ab, so dass Hydraulikflüssigkeit vom Innenraum 26 über die Einlassöffnung 68 in das Filtergehäuse 46 strömen kann.

In das Filtergehäuse 46 ist über die Filterzugangsöffnung 36 ein Filterelement 70 eingesetzt, das eine untere Endscheibe 72 und eine obere Endscheibe 74 aufweist sowie ein zwischen der unteren Endscheibe 72 und der oberen Endscheibe 74 angeordnetes, in der dargestellten Ausführungsform sternförmig gefaltetes Filtermedium 76. Das Filtermedium 76 bildet einen Hohlzylinder aus. An der unteren Endscheibe 72 ist ein Bypass-Ventil 78 angeordnet.

Die obere Endscheibe 74 bildet eine schräg zur Längsachse 80 des Filterelements 70 ausgerichtete Trennscheibe 82 aus, die an ihrem Umfangsrand als Dichtlippe 84 ausgestaltet ist. Die Dichtlippe 84 liegt an der Innenseite der Innenwand 32 des Filterkopfteils 28 flüssigkeitsdicht an und unterteilt den von der Innenwand 32 umgebenen Innenraum des Filterkopfteils 28 in einen oberhalb der Trennscheibe 82 angeordneten Einlassraum 86 und einen unterhalb der Trennscheibe 82 angeordneten Auslassraum 88. Ein Haltebügel 90 ist an die obere Endscheibe 72 angeformt und erstreckt sich bis zum Deckel 38, an dem der Haltebügel 90 anliegt. Das Filterelement 70 stützt sich einerseits an der Stützwand 60 des Filtergehäuses 46 und andererseits am Deckel 38 ab.

Das Tankgehäuse 12 weist mehrere Anschlussöffnungen auf, wobei eine erste Anschlussöffnung eine am Filterkopfteil 28 angeordnete Tankeinlassöffnung 92 ausbildet, die in den Einlassraum 86 mündet, und wobei eine zweite Anschlussöffnung eine am Filterkopfteil 28 angeordnete Tankauslassöffnung 94 ausbildet, die in den Auslassraum 88 mündet. Außerdem ist am Filterkopfteil 28 noch eine weitere Anschlussöffnung angeordnet, die ebenfalls eine Tankeinlassöffnung ausbildet und in der Zeichnung nicht dargestellt ist. Bezogen auf die Längsachse 80 des Filterelements 70 sind die Tankeinlassöffnungen und die Tankauslassöffnung 94 auf gleicher Höhe angeordnet.

Über die Tankeinlassöffnungen kann Hydraulikflüssigkeit in den Einlassraum 86 einströmen. Über eine zentrale Durchbrechung 96 der oberen Endscheibe 74 gelangt die einströmende Hydraulikflüssigkeit zum Filtermedium 76 und kann dieses in radialer Richtung von innen nach außen durchströmen, wobei die Hydraulikflüssigkeit gefiltert wird. Die gefilterte Hydraulikflüssigkeit kann anschließend über den Auslassraum 88 und die Tankauslassöffnung 94 dem Tankgehäuse 12 entnommen werden. Übersteigt der Druck der gefilterten Hydraulikflüssigkeit innerhalb des Filtergehäuses 46 den voranstehend bereits erwähnten Maximaldruck von beispielsweise 0,3 bar, so öffnet das Auslassventil 52 und die gefilterte Hydraulikflüssigkeit kann über die Auslassöffnung 58 in den Innenraum 26 des Tankgehäuses 12 gelangen. Bildet sich im Filtergehäuse 46 ein Unterdruck aus, so kann Hydraulikflüssigkeit aus dem Innenraum 26 des Tankgehäuses 12 über die Einlassöffnung 68 zum Auslassraum 88 gelangen und über die Tankauslassöffnung 94 aus dem Tankgehäuse 12 herausströmen.

Auf der Außenseite des Tankgehäuses 12 ist an der Tankeinlassöffnung 92 ein erstes Anschlusselement 100 angeordnet, das ein vorgefertigtes, modulares Bauteil ausbildet und bevorzugt in seiner Gesamtheit als Kunststoffkörper in einem Spritzgießverfahren hergestellt ist. Im dargestellten Ausführungsbeispiel ist das erste Anschlusselement als einteiliger Kunststoffkörper ohne metallische Teilkomponente hergestellt. Das Anschlusselement 100 weist einen Anschlussflansch 102 auf, der mittels eines Lasers mit dem Tankgehäuse 12 verschweißt ist. An den Anschlussflansch 102 schließt sich ein Rohrstutzen 104 des ersten Anschlusselements 100 an, der nach außen vom Tankgehäuse 12 absteht und außenseitig eine Aufnahmestruktur 106 ausbildet, die im dargestellten Ausführungsbeispiel in Form mehrerer, den Rohrstutzen 104 in Umfangsrichtung umgebender Ringnuten 108 ausgestaltet ist. Ein weiteres Anschlusselement 109 ist an der in der Zeichnung nicht dargestellten weiteren Tankeinlassöffnung angeordnet und ist identisch ausgestaltet wie das erste Anschlusselement 100.

Ein zweites Anschlusselement 110 ist ebenfalls identisch ausgebildet wie das erste Anschlusselement 100 und ist an der Tankauslassöffnung 94 angeordnet. Auch das zweite Anschlusselement 110 ist im dargestellten Ausführungsbeispiel als einteiliger Kunststoffkörper ohne metallische Teilkomponente in einem Spritzgießverfahren hergestellt und mit dem Tankgehäuse 12 mittels eines Laserstrahls verschweißt.

Das erste Anschlusselement 100 ist ebenso wie das zweite Anschlusselement 110 und das weitere Anschlusselement 109 mit einem Schnellkupplungsteil 112 ohne Einsatz eines Spezialwerkzeugs lösbar verbindbar. Das Schnellkupplungsteil 112 weist ein Außenrohrstück 114 und ein koaxial zu diesem ausgerichtetes Innenrohrstück 116 auf. Mit Hilfe einer elastisch aufspreizbaren Sicherungsmanschette 118 ist das Schnellkupplungsteil 112 mit dem Anschlusselement 100 bzw. 110 verbindbar. Das Schnellkupplungsteil 112 bildet ein einteiliges Kunststoffformteil aus.

In Figur 3 ist das Schnellkupplungsteil 112 auf den Rohrstutzen 104 des ersten Anschlusselements 100 aufgesteckt, wobei das Innenrohrstück 116 in den Rohrstutzen 104 eintaucht und das Außenrohrstück 114 den Rohrstutzen 104 umgibt. Nach dem Aufsetzen des Außenrohrstücks 114 auf den Rohrstutzen 104 kann die elastisch aufspreizbare Sicherungsmanschette 118 in einer senkrecht zur Längsachse 120 des Rohrstutzens 104 ausgerichteten Montagerichtung auf das Außenrohrstück 114 aufgesetzt werden, wobei ein innenseitig an der Sicherungsmanschette 118 angeordnetes Arretierungselement 121 eine Durchbrechung des Außenrohrstücks 114 durchgreift und in eine der Ringnuten 108 eintaucht. Auf diese Weise ist das Schnellkupplungsteil 112 am Rohrstutzen 104 festgelegt. Der Rohrstutzen 104 trägt an seiner dem Anschlussflansch 102 abgewandten Stirnseite einen Dichtring122, der sicherstellt, dass das Schnellkupplungsteil 112 flüssigkeitsdicht mit dem Rohrstutzen 104 verbunden ist.

Das Schnellkupplungsteil 112 weist dem Rohrstutzen 104 abgewandt einen Anschlussnippel 124 auf, an den eine Hydraulikleitung, beispielsweise ein Hydraulikschlauch, angeschlossen werden kann.

Im Abstand zum Filterkopfteil 28 weist das Tankgehäuse 12 an der Deckenwand 16 eine dritte Anschlussöffnung 126 auf, die von einem Rohrstück 128 durchgriffen ist, das in den Innenraum 26 des Tankgehäuses 12 eintaucht und sich mit einer endseitigen radialen Erweiterung 130 an einer Stufe der dritten Anschlussöffnung 126 abstützt. Das Rohrstück 128 ist im dargestellten Ausführungsbeispiel als einteiliger Kunststoffkörper in einem Spritzgießverfahren hergestellt und im Bereich der radialen Erweiterung 130 mittels eines Laserstrahls mit dem Tankgehäuse 12 verschweißt.

Fluchtend zum Rohrstück 128 ist an der dritten Anschlussöffnung 126 ein drittes Anschlusselement 132 angeordnet, das identisch ausgebildet ist wie die voranstehend erläuterten Anschlusselemente 100, 109 und 110 und das ebenfalls einen Anschlussflansch aufweist, der mittels eines Laserstrahls mit dem Tankgehäuse 12 verschweißt ist. Auch an das dritte Anschlusselement 132 kann mittels eines Schnellkupplungsteils 112 eine Hydraulikleitung flüssigkeitsdicht angeschlossen werden.

An der ersten Seitenwand 22 weist das Tankgehäuse 12 weitere Anschlussöffnungen auf, an denen jeweils ein Anschlusselement 134, 136, 138 bzw. 140 angeordnet ist. Auch die Anschlusselemente 134, 136, 138 und 140 sind im dargestellten Ausführungsbeispiel als einteilige Kunststoffkörper ohne metallische Teilkomponente in einem Spritzgießverfahren hergestellt und mittels eines Laserstrahls mit dem Tankgehäuse 12 verschweißt.

An der ersten Seitenwand 22 ist außerdem eine Ölstandsanzeige 142 angeordnet, an der der Benutzer den Ölstand ablesen kann.

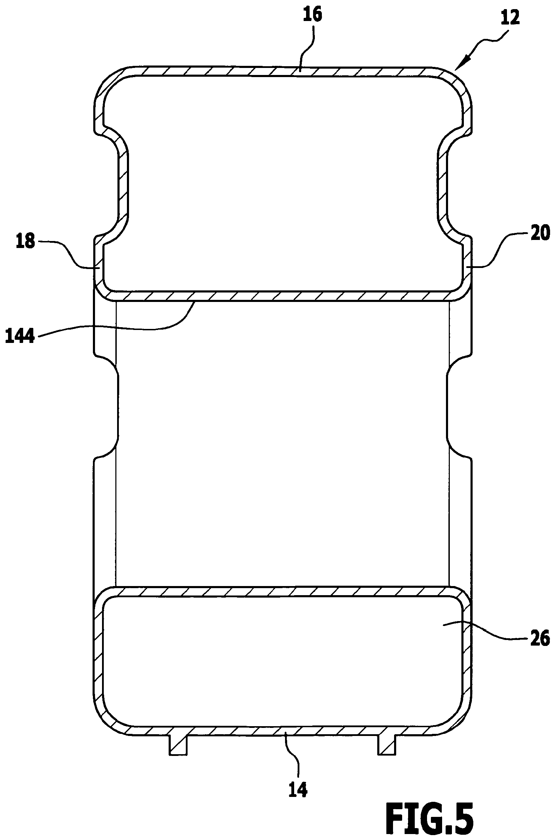

Zur Erhöhung der mechanischen Stabilität bildet das Tankgehäuse 12 eine in Figur 5 dargestellte erste Traverse 144 sowie eine im Abstand zur ersten Traverse 144 angeordnete zweite Traverse 146 aus. Die beiden Traversen 144, 146 sind hohl ausgebildet und erstrecken sich von der Stirnwand 20 bis zur Rückwand 18 und verleihen dadurch dem Tankgehäuse 12 eine hohe mechanische Stabilität. Eine weitere mechanische Verstärkung des Tankgehäuses 12 wird vom Filtergehäuse 46 gebildet, das mit dem Tankgehäuse 12, wie bereits erwähnt, verschweißt ist.

Zum Belüften und Entlüften des Tankgehäuses 12 bildet dieses an der Deckenwand 16 eine Belüftungsöffnung 148 aus, an der ein Belüftungsfilter 150 angeordnet ist. In das Belüftungsfilter 150 ist ein bidirektionales Ventil (in der Zeichnung nicht dargestellt) integriert.

Die Herstellung des Tankgehäuses in Form eines einteiligen Kunststoffhohlkörpers ohne metallische Teilkomponente, also insbesondere ohne metallische Einlege- oder Verstärkungsteile, in einem Rotationsformverfahren kann mit verhältnismäßig geringen Investitionskosten und großen gestalterischen Freiheiten und mit günstigen Stückkosten, insbesondere im Vergleich mit Metalltanks, erfolgen. Die mit dem Tankgehäuse 12 verschweißten Anschlusselemente 100, 109, 110, 132 bis 140, die jeweils als einteilige Kunststoffkörper ohne metallische Teilkomponente in einem Spritzgießverfahren hergestellt sind, ermöglichen es auf konstruktiv einfache Weise, Hydraulikleitungen an entsprechende Anschlussöffnungen des Tankgehäuses 12 anzuschließen, wobei die Herstellung der Anschlusselemente in großer Stückzahl und folglich kostengünstig erfolgen kann. Der komplette Hydrauliktank 10 zeichnet sich somit insbesondere bei kleinen bis mittleren Stückzahlen durch ein sehr gutes Preis-Leistungs-Verhältnis aus.

## Patentansprüche

1. Hydrauliktank zur Bevorratung einer Hydraulikflüssigkeit mit einem einteiligen Tankgehäuse (12), das einen Kunststoffhohlkörper ausbildet und in einem Rotationsformverfahren hergestellt ist, wobei das Tankgehäuse (12) mindestens eine Anschlussöffnung (92, 94, 126) aufweist, an der ein Anschlusselement (100, 109, 110, 132, 134, 136, 138, 140) angeordnet ist, das mit einer Hydraulikleitung lösbar verbindbar ist, **dadurch gekennzeichnet, dass** das Anschlusselement (100, 109, 110, 132, 134, 136, 138, 140) einen Kunststoffkörper aufweist, der in einem Spritzgießverfahren hergestellt und mit dem Tankgehäuse (12) verschweißt ist.

2. Hydrauliktank nach Anspruch 1, **dadurch gekennzeichnet, dass** der Kunststoffkörper des Anschlusselements (100, 109, 110, 132, 134, 136, 138, 140) als einteiliges Bauteil im Spritzgießverfahren hergestellt ist und/oder das komplette Anschlusselement (100, 109, 110, 132, 134, 136, 138, 140) als im Spritzgießverfahren hergestellter Kunststoffkörper ohne metallische Teilkomponente ausgestaltet ist.

3. Hydrauliktank nach Anspruch 1 oder 2, **dadurch**
**gekennzeichnet, dass** das Tankgehäuse (12) aus einem Polyamidmaterial geformt ist und/oder das Tankgehäuse (12) aus einem faserverstärkten Polyamidmaterial geformt ist.

4. Hydrauliktank nach einem der voranstehenden Ansprüche, **dadurch gekennzeichnet, dass** in das Tankgehäuse (12) ein Filtersystem (27) integriert ist, insbesondere das Tankgehäuse (12) eine Filterzugangsöffnung (36) aufweist, die von einem Randabschnitt (34) des Tankgehäuses (12) umgeben ist, wobei am Randabschnitt (34) ein über die Filterzugangsöffnung (36) in das Tankgehäuse (12) eingesetztes Filtergehäuse (46) festgelegt ist, das als Kunststoffkörper in einem Spritzgießverfahren hergestellt ist, und wobei in das Filtergehäuse (46) ein Filterelement (70) eingesetzt ist.

5. Hydrauliktank nach Anspruch 4, **dadurch gekennzeichnet, dass** der Randabschnitt als im Tankgehäuse (12) angeordneter Stützring (34) ausgestaltet ist und/oder das Filtergehäuse (46) mit dem Randabschnitt (34) verschweißt ist.

6. Hydrauliktank nach Anspruch 4 oder 5, **dadurch gekennzeichnet, dass** das Filtergehäuse (46) aus einem faserverstärkten Polyamidmaterial geformt ist.

7. Hydrauliktank nach einem der Ansprüche 4 bis 6, **dadurch**
**gekennzeichnet, dass** das Tankgehäuse (12) ein Filterkopfteil (28) ausbildet, an dem zumindest eine Anschlussöffnung angeordnet ist und das den die Filterzugangsöffnung (36) umgebenden Randabschnitt (34) aufweist, insbesondere am Filterkopfteil (28) mindestens eine erste Anschlussöffnung und mindestens eine zweite Anschlussöffnung angeordnet sind, wobei die mindestens eine erste Anschlussöffnung eine Tankeinlassöffnung (92) ausbildet und wobei die mindestens eine zweite Anschlussöffnung eine Tankauslassöffnung (94) ausbildet.

8. Hydrauliktank nach Anspruch 7, **dadurch gekennzeichnet, dass** das Filterelement (70) eine obere Endscheibe (74) und eine untere Endscheibe (72) aufweist, zwischen denen ein Filtermedium (76) angeordnet ist, wobei die obere Endscheibe (74) einen Innenraum des Filterkopfteils (28) in einen Einlassraum (86) für zu filtrierende Flüssigkeit und einen Auslassraum (88) für gefilterte Hydraulikflüssigkeit flüssigkeitsdicht unterteilt, wobei die mindestens eine Tankeinlassöffnung (92) in den Einlassraum (86) mündet und wobei die mindestens eine Tankauslassöffnung (94) in den Auslassraum (88) mündet, insbesondere die obere Endscheibe (74) eine schräg zur Längsachse (80) des Filterelements (70) ausgerichtete Trennscheibe (82) ausbildet, die an einer Innenseite des Filterkopfteils (28) flüssigkeitsdicht anliegt.

9. Hydrauliktank nach Anspruch 7 oder 8, **dadurch gekennzeichnet, dass** die mindestens eine Tankeinlassöffnung (92) und die mindestens eine Tankauslassöffnung (94) bezogen auf die Längsachse (80) des Filterelements (70) auf gleicher Höhe angeordnet sind.

10. Hydrauliktank nach einem der Ansprüche 4 bis 9, **dadurch gekennzeichnet, dass** das Filtergehäuse (46) an seinem in das Tankgehäuse (12) eintauchenden Endabschnitt (48) einen Aufnahmeraum (50) für ein Einlassventil (54) und/oder ein Auslassventil (52) ausbildet.

11. Hydrauliktank nach einem der Ansprüche 4 bis 10, **dadurch gekennzeichnet, dass** sich das Filterelement (70) an einem in das Tankgehäuse (12) eintauchenden Endabschnitt (48) des Filtergehäuses (46) abstützt.

12. Hydrauliktank nach einem der voranstehenden Ansprüche, **dadurch gekennzeichnet, dass** das Tankgehäuse (12) mindestens eine Traverse (144, 146) ausbildet, die sich von einer ersten Tankgehäusewand (20) zu einer gegenüberliegenden zweiten Tankgehäusewand (18) erstreckt und hohl ausgestaltet ist.

13. Verfahren zum Herstellen eines Hydrauliktanks (10), insbesondere eines Hydrauliktanks (10) nach einem der voranstehenden Ansprüche, wobei der Hydrauliktank (10) ein Tankgehäuse (12) aufweist mit mindestens einer Anschlussöffnung (92, 94, 126), an der ein Anschlusselement (100, 110, 132, 134, 136, 138, 140) angeordnet ist, das mit einer Hydraulikleitung lösbar verbindbar ist, wobei das Verfahren die folgenden Schritte umfasst:
- Herstellen des Tankgehäuses (12) als einteiliger Kunststoffhohlkörper in einem Rotationsformverfahren;
- Bereitstellen des Anschlusselements (100, 110, 132, 134, 136, 138, 140) mit einem Kunststoffkörper, der in einem Spritzgießverfahren hergestellt wird;
- Verschweißen des Kunststoffkörpers im Bereich einer Anschlussöffnung (92, 94, 126) mit dem Tankgehäuse (12).

14. Verfahren nach Anspruch 13, **dadurch gekennzeichnet, dass** der Kunststoffkörper des Anschlusselements (100, 110, 132, 134, 136, 138, 140) im Spritzgießverfahren als einteiliger Kunststoffkörper hergestellt wird und/oder komplette Anschlusselement (100, 110, 132, 134, 136, 138, 140) als Kunststoffkörper ohne metallische Teilkomponente hergestellt wird.

15. Verfahren nach einem der Ansprüche 13 oder 14, **dadurch gekennzeichnet, dass** der Kunststoffkörper des Anschlusselements (100, 110, 132, 134, 136, 138, 140) mit Hilfe eines Laserstrahls mit dem Tankgehäuse (12) verschweißt wird.

16. Verfahren nach einem der Ansprüche 13 bis 15, **dadurch gekennzeichnet, dass** in das Tankgehäuse (12) ein Filtersystem (27) integriert wird, insbesondere das Tankgehäuse (12) im Rotationsformverfahren mit einem Filterkopfteil (28) ausgestaltet wird, das mindestens eine Anschlussöffnung (92, 94) aufweist und eine Filterzugangsöffnung (36) umgibt, wobei ein Filtergehäuse (46) als Kunststoffkörper in einem Spritzgießverfahren hergestellt und über die Filterzugangsöffnung (36) in das Tankgehäuse (12) eingesetzt wird, und wobei das Filtergehäuse (46) an einem die Filterzugangsöffnung (36) umgebenden Randabschnitt (48) des Filterkopfteils (28) festgelegt wird, insbesondere das Filtergehäuse (46) mit dem Randabschnitt (48) verschweißt wird.

## Claims

1. A hydraulic tank for storing a hydraulic fluid with a one-piece tank housing (12) that forms a hollow plastic body and is produced in a rotational molding process, wherein the tank housing (12) has at least one connection opening (92, 94, 126), on which a connection element (100, 109, 110, 132, 134, 136, 138, 140) is arranged that can be separably connected to a hydraulic line, **characterized in that** the connection element (100, 109, 110, 132, 134, 136, 138, 140) has a plastic body that is produced in an injection molding process and welded to the tank housing (12).

2. The hydraulic tank according to claim 1, **characterized in that** the plastic body of the connection element (100, 109, 110, 132, 134, 136, 138, 140) is produced in the form of a one-piece component in an injection molding process and/or the complete connection element (100, 109, 110, 132, 134, 136, 138, 140) is realized in the form of a plastic body without metallic subcomponent, which is produced in an injection molding process.

3. The hydraulic tank according to claim 1 or 2, **characterized in that** the tank housing (12) is molded of a polyamide material and/or the tank housing (12) is molded of a fiber-reinforced polyamide material.

4. The hydraulic tank according to one of the preceding claims, **characterized in that** a filter system (27) is integrated into the tank housing (12), wherein the tank housing (12) particularly has a filter access opening (36) that is surrounded by an edge section (34) of the tank housing (12), wherein a filter housing (46), which is produced in the form of a plastic body in an injection molding process and inserted into the tank housing (12) through the filter access opening (36), is fixed on the edge section (34), and wherein a filter element (70) is inserted into the filter housing (46).

5. The hydraulic tank according to claim 4, **characterized in that** the edge section is realized in the form of a support ring (34) arranged in the tank housing (12) and/or the filter housing (46) is welded to the edge section (34).

6. The hydraulic tank according to claim 4 or 5, **characterized in that** the filter housing (46) is molded of a fiber-reinforced polyamide material.

7. The hydraulic tank according to one of claims 4 to 6, **characterized in that** the tank housing (12) forms a filter head piece (28), on which at least one connection opening is arranged and which has the edge section (34) surrounding the filter access opening (36), wherein at least one first connection opening and at least one second connection opening particularly are arranged on the filter head piece (28), wherein the at least one first connection opening forms a tank inlet opening (92), and wherein the at least one second connection opening forms a tank outlet opening (94).

8. The hydraulic tank according to claim 7, **characterized in that** the filter element (70) has an upper end plate (74) and a lower end plate (72), between which a filter medium (76) is arranged, wherein the upper end plate (74) divides an interior of the filter head piece (28) into an inlet chamber (86) for fluid to be filtered and an outlet chamber (88) for filtered hydraulic fluid in a fluid-tight manner, wherein the at least one tank inlet opening (92) leads into the inlet chamber (86) and the at least one tank outlet opening (94) leads into the outlet chamber (88), and wherein the upper end plate (74) particularly forms a partition plate (82), which is aligned obliquely to the longitudinal axis (80) of the filter element (70) and abuts on an inner side of the filter head piece (28) in a fluid-tight manner.

9. The hydraulic tank according to claim 7 or 8, **characterized in that** the at least one tank inlet opening (92) and the at least one tank outlet opening (94) are arranged at the same height referred to the longitudinal axis (80) of the filter element (70).

10. The hydraulic tank according to one of claims 4 to 9, **characterized in that** the filter housing (46) forms a receptacle space (50) for an inlet valve (54) and/or an outlet valve (52) on its end section (48) penetrating into the tank housing (12).

11. The hydraulic tank according to one of claims 4 to 10, **characterized in that** the filter element (70) is supported on an end section (48) of the filter housing (46) penetrating into the tank housing (12).

12. The hydraulic tank according to one of the preceding claims, **characterized in that** the tank housing (12) forms at least one cross member (144, 146), which extends from a first tank housing wall (20) to an opposite second tank housing wall (18) and is realized in a hollow manner.

13. A method for producing a hydraulic tank (10), particularly a hydraulic tank (10) according to one of the preceding claims, wherein the hydraulic tank (10) has a tank housing (12) with at least one connection opening (92, 94, 126), on which a connection element (100, 110, 132, 134, 136, 138, 140) is arranged that can be separably connected to a hydraulic line, and wherein the method comprises the following steps:
- producing the tank housing (12) in the form of a one-piece hollow plastic body in a rotational molding process;
- supplying the connection element (100, 110, 132, 134, 136, 138, 140) with a plastic body that is produced in injection molding process;
- welding the plastic body to the tank housing (12) in the region of a connection opening (92, 94, 126) .

14. The method according to claim 13, **characterized in that** the plastic body of the connection element (100, 110, 132, 134, 136, 138, 140) is produced in the form of a one-piece plastic body in an injection molding process and/or the complete connection element (100, 110, 132, 134, 136, 138, 140) is produced in the form of a plastic body without metallic subcomponent.

15. The method according to one of claims 13 or 14, **characterized in that** the plastic body of the connection element (100, 110, 132, 134, 136, 138, 140) is welded to the tank housing (12) with the aid of a laser beam.

16. The method according to one of claims 13 to 15, **characterized in that** a filter system (27) is integrated into the tank housing (12), wherein the tank housing (12) particularly is produced in a rotational molding process and realized with a filter head piece (28), which has at least one connection opening (92, 94) and surrounds a filter access opening (36), wherein a filter housing (46) is produced in the form of a plastic body in injection molding process and inserted into the tank housing (12) through the filter access opening (36), and wherein the filter housing (46) is fixed on an edge section (48) of the filter head piece (28) surrounding the filter access opening (36), particularly by welding the filter housing (46) to the edge section (48).

## Revendications

1. Réservoir hydraulique pour le stockage d'un liquide hydraulique avec une enveloppe de réservoir (12) en une seule pièce, qui constitue un corps creux en matière plastique et est fabriqué dans un procédé de moulage par rotation, sachant que l'enveloppe de réservoir (12) comporte au moins une ouverture de raccordement (92, 94, 126) sur laquelle est disposé un élément de raccordement (100, 109, 110, 132, 134, 136, 138, 140), qui peut être relié de façon amovible à une conduite hydraulique, **caractérisé en ce que** l'élément de raccordement (100, 109, 110, 132, 134, 136, 138, 140) comporte un corps en matière plastique, qui est fabriqué dans un procédé de moulage par injection et est soudé à l'enveloppe de réservoir (12).

2. Réservoir hydraulique selon la revendication 1, **caractérisé en ce que** le corps en matière plastique de l'élément de raccordement (100, 109, 110, 132, 134,136, 138, 140) est fabriqué sous la forme d'un composant en une seule pièce dans un procédé de moulage par injection et/ou l'élément de raccordement complet (100, 109, 110, 132, 134, 136, 138, 140) est configuré sous la forme d'un corps de matière plastique fabriqué dans un procédé de moulage par injection sans composant partiel métallique.

3. Réservoir hydraulique selon la revendication 1 ou 2, **caractérisé en ce que** l'enveloppe de réservoir (12) est moulée à partir d'un matériau polyamide et/ou l'enveloppe de réservoir (12) est moulée à partir d'un matériau polyamide renforcé avec des fibres.

4. Réservoir hydraulique selon l'une quelconque des revendications précédentes, **caractérisé en ce qu'**un système de filtre (27) est intégré dans l'enveloppe de réservoir (12), l'enveloppe de réservoir (12) comporte en particulier une ouverture d'accès au filtre (36), qui est entourée par une section de bordure (34) de l'enveloppe de réservoir (12), sachant que sur la section de bordure (34) est fixé un boîtier de filtre (46) inséré par l'ouverture d'accès au filtre (36) dans l'enveloppe de réservoir (12), qui est fabriqué sous la forme d'un corps en matière plastique dans un procédé de moulage par injection et sachant qu'un élément de filtre (70) est inséré dans le boîtier de filtre (46).

5. Réservoir hydraulique selon la revendication 4, **caractérisé en ce que** la section de bordure est configurée sous la forme d'une bague de support (34) disposée dans l'enveloppe de réservoir (12) et/ou le boîtier de filtre (46) est soudé à la section de bordure (34) .

6. Réservoir hydraulique selon la revendication 4 ou 5, **caractérisé en ce que** le boîtier de filtre (46) est moulé à partir d'un matériau polyamide renforcé avec des fibres.

7. Réservoir hydraulique selon l'une quelconque des revendications 4 à 6, **caractérisé en ce que** l'enveloppe de réservoir (12) constitue une partie de tête de filtre (28) sur laquelle est disposée au moins une ouverture de raccordement et comporte la section de bordure (34) entourant l'ouverture d'accès au filtre (36), sur la partie de tête de filtre (28) sont disposées en particulier au moins une première ouverture de raccordement et au moins une deuxième ouverture de raccordement, sachant qu'au moins une première ouverture de raccordement constitue une ouverture d'admission de réservoir (92) et sachant qu'au moins une deuxième ouverture de raccordement constitue une ouverture de sortie de réservoir (94).

8. Réservoir hydraulique selon la revendication 7, **caractérisé en ce que** l'élément de filtre (70) comporte un disque d'extrémité supérieure (74) et un disque d'extrémité inférieure (72) entre lesquels est disposé un moyen de filtrage (76), sachant que le disque d'extrémité supérieure (74) divise de façon étanche au liquide un espace intérieur de la partie de tête de filtre (28) en un espace d'admission (86) pour le liquide à filtrer et un espace de sortie (88) pour le liquide hydraulique filtré, sachant que l'au moins une ouverture d'admission de réservoir (92) débouche dans l'espace d'admission (86) et sachant que l'au moins une ouverture de sortie de réservoir (94) débouche dans l'espace de sortie (88), le disque d'extrémité supérieure (74) constitue en particulier un disque de séparation (82) orienté en diagonale par rapport à l'axe longitudinal (80) de l'élément de filtre (70), qui s'applique de façon étanche au liquide à un côté intérieur de la partie de tête de filtre (28).

9. Réservoir hydraulique selon la revendication 7 ou 8, **caractérisé en ce que** l'au moins une ouverture d'admission de réservoir (92) et l'au moins une ouverture de sortie de réservoir (94) sont disposées à la même hauteur en se référant à l'axe longitudinal (80) de l'élément de filtre (70).

10. Réservoir hydraulique selon l'une quelconque des revendications 4 à 9, **caractérisé en ce que** le boîtier de filtre (46) constitue sur sa section d'extrémité (48) plongeant dans l'enveloppe de réservoir (12) un espace de réception (50) pour une soupape d'admission (54) et/ou une soupape de sortie (52).

11. Réservoir hydraulique selon l'une quelconque des revendications 4 à 10, **caractérisé en ce que** l'élément de filtre (70) s'appuie sur une section d'extrémité (48) du boîtier de filtre (46) plongeant dans l'enveloppe de réservoir (12).

12. Réservoir hydraulique selon l'une quelconque des revendications précédentes, **caractérisé en ce que** l'enveloppe de réservoir (12) constitue au moins une traverse (144, 146), qui s'étend d'une première paroi d'enveloppe de réservoir (20) à une deuxième paroi d'enveloppe de réservoir (18) opposée et est constituée creuse.

13. Procédé de fabrication d'un réservoir hydraulique (10), en particulier d'un réservoir hydraulique (10) selon l'une quelconque des revendications précédentes, sachant que le réservoir hydraulique (10) comporte une enveloppe de réservoir (12) avec au moins une ouverture de raccordement (92, 94, 126) sur laquelle est disposé un élément de raccordement (100, 110, 132, 134, 136, 138, 140), qui peut être relié de façon amovible à une conduite hydraulique, sachant que le procédé comprend les étapes suivantes :
- fabrication de l'enveloppe de réservoir (12) sous la forme d'un corps creux en matière plastique en une seule pièce dans un procédé de moulage par rotation,
- préparation de l'élément de raccordement (100, 110, 132, 134, 136, 138, 140) avec un corps en matière plastique, qui est fabriqué dans un procédé de moulage par injection,
- soudage du corps en matière plastique dans la zone d'une ouverture de raccordement (92, 94, 126) avec l'enveloppe de réservoir (12).

14. Procédé selon la revendication 13, **caractérisé en ce que** le corps en matière plastique de l'élément de raccordement (100, 110, 132, 134, 136, 138, 140) est fabriqué sous la forme d'un corps en matière plastique d'une seule pièce dans un procédé de moulage par injection et/ou l'élément de raccordement complet (100, 110, 132, 134, 136, 138, 140) est fabriqué sous la forme d'un corps en matière plastique sans composant partiel métallique.

15. Procédé selon l'une quelconque des revendications 13 ou 14, **caractérisé en ce que** le corps en matière plastique de l'élément de raccordement (100, 110, 132, 134, 136, 138, 140) est soudé à l'enveloppe de réservoir (12) à l'aide d'un faisceau laser.

16. Procédé selon l'une quelconque des revendications 13 à 15, **caractérisé en ce qu'**un système de filtre (27) est intégré dans l'enveloppe de réservoir (12), en particulier, l'enveloppe de réservoir (12) est configurée dans un procédé de moulage par rotation avec une partie de tête de filtre (28), qui comporte au moins une ouverture de raccordement (92, 94) et entoure au moins une ouverture d'accès au filtre (36), sachant qu'un boîtier de filtre (46) est fabriqué sous la forme d'un corps en matière plastique dans un procédé de moulage par injection et est inséré par l'ouverture d'accès au filtre (36) dans l'enveloppe de réservoir (12) et sachant que le boîtier de filtre (46) est fixé à une section de bordure (48) de la partie de tête de filtre (28) entourant l'ouverture d'accès au filtre (36), le boîtier de filtre (46) est, en particulier, soudé à la section de bordure (48).
